# EUROPÄISCHE PATENTSCHRIFT

(11) **EP 0 672 557 B1**
(45) Veröffentlichungstag und Bekanntmachung des Hinweises auf die Patenterteilung: **12.03.1997**
(21) Anmeldenummer: 94120529.6
(22) Anmeldetag: 23.12.1994
(51) Int. Cl.: B60R 21/06

(54) **Bahnförmige Rückhaltevorrichtung für den Innenraum von Kraftfahrzeugen**
Restraining sheet for vehicle compartments
Nappe de retenue pour habitacle de véhicules

(30) Priorität: 14.03.1994 DE 4408484
(43) Veröffentlichungstag der Anmeldung: 20.09.1995
(73) Patentinhaber: PETER BUTZ GmbH & Co Verwaltungs-KG, D-40764 Langenfeld (DE)
(72) Erfinder: Labeur, Luc, B-3010 Kessel-Lo (BE)
(74) Vertreter: Patentanwälte Ostriga & Sonnet

(56) Entgegenhaltungen:
- DE-A- 4 229 849
- GB-A- 2 133 355
- US-A- 2 194 390
- US-A- 4 708 384
- US-A- 5 290 086

## Beschreibung

Die Erfindung betrifft eine bahnförmige Rückhaltevorrichtung für den Innenraum von Kraftfahrzeugen, mit einer netzartige Maschen aufweisenden Haltebahn entsprechend dem Obergriff des Anspruchs 1. Eine solche Rückhaltevorrichtung ist durch die DE 40 10 209 A1 bekanntgeworden.

Die bekannte Rückhaltevorrichtung weist eine Haltebahn auf, deren Kontur in ihrer aufgespannten Betriebslage in Anpassung an die beiden gegenüberliegenden C-Säulen der Karosserie nach oben hin trapezförmig verjüngend ausgebildet ist.

Die Haltebahn der Rückhaltevorrichtung ist mittels einer rückseitig an die Rücksitzlehne eines Kombinations-Kraftwagens angebrachten Wickelwelle durch einen Federmotor aufwickelbar. Von der Wickelwelle ist die Haltebahn entgegen der Speicherkraft des Federmotors in ihre Betriebslage ausziehbar und mittels einer an ihrem oberen Rand, welcher der Wickelwelle parallel ist, eingebundenen Haltestange mit deren beiden Enden an den C-Säulen lösbar einzuhängen.

Ein wesentlicher Teil der Haltestange besteht aus einem sich zwischen ihren Befestigungsenden erstreckenden rohrartigen Körper, welcher in einem laschenartigen Fortsatz der Randeinfassung aufgenommen ist. Diese erstreckt sich entlang des gesamten oberen Randes der Haltebahn als flächiger Werkstoffstreifen, welcher über den oberen Netzrand hinweg doppellagig umgeschlagen und dort befestigt ist. Die Befestigung geschieht in solchen Fällen üblicher Weise mittels mehrerer Längsnähte.

Die schräg nach oben zulaufenden Seitenränder der Haltebahn sind mit ähnlichen Randeinfassungen eingesäumt, welche jedoch keine laschenförmigen Fortsätze zur Aufnahme von Haltestangen besitzen.

Bevor die Ränder einer netzartigen Haltebahn mit einer Randeinfassung versehen werden, ist es üblich, die textilen Einbindungen der Netzränder zu sichern, was beispielsweise mit einer relativ aufwendig herzustellenden Häkelkante geschehen kann.

Trotz ihrer grundsätzlichen Sicherheitsvorteile wird die bahnförmige Rückhaltevorrichtung gemäß der DE 40 10 209 A1 wegen ihrer nur mit einem relativ großen Aufwand anzubringenden Randeinfassung als verbesserungsbedürftig empfunden.

Auch andere Lösungen, Ränder von netzartigen Haltebahnen einzufassen, wie sie beispielsweise in der DE 16 80 142 (s.dort z.B. Fig.3-5; Fig. 8 und 9; sowie Fig. 16-19) dargestellt sind, werden mit einem relativ großen technischen Aufwand in sehr umständlicher Weise hergestellt.

Ausgehend von der bahnförmigen Rückhaltevorrichtung für den Innenraum von Kraftfahrzeugen gemäß der DE 40 10 209 A1, liegt der Erfindung im Bewußtsein der Nachteile des Bekannten die Aufgabe zugrunde, die Randeinfassung der Haltebahn mit einem wesentlich geringeren technischen Aufwand und in kürzerer Zeit herzustellen.

Diese Aufgabe wird entsprechend der Erfindung dadurch gelöst, daß die Haltebahn ein Stanzteil mit unbearbeiteten Stanzrändern ist, von denen jeder in der Fuge zwischen zwei gegeneinander weisenden Fügeflächen einer Randeinfassung aufgenommen ist, wobei die zwischen den Maschenelementen gebildeten und von der Randeinfassung überlappten Freiräume unter Einbeziehung geschlossener Maschenfenster von den unlösbar flächig aneinander befestigten Fügeflächen durchgriffen sind.

Entsprechend der Erfindung besteht die Haltebahn zunächst aus einem Stanzteil, dessen Stanzränder nicht gesondert gesichert, sondern vielmehr unbearbeitet roh belassen werden. Jeder Stanzrand ist zwischen zwei gegeneinander weisenden Fügeflächen der Randeinfassung aufgenommen. Die Fügeflächen der Randeinfassung sind nicht etwa punktuell, sondern vielmehr flächig, unlösbar miteinander verbunden.

Diese flächig unlösbare Verbindung der beiden Fügeflächen erstreckt sich zwischen den von den (z.B. textilen) Maschenelementen der Haltebahn gebildeten Freiräume hindurch, insbesondere durch die geschlossenen Maschenfenster hindurch. Auf diese erfindungsgemäße Weise wird demnach zugleich die Kante der netzartigen Haltebahn gegen Auflösen ihrer textilen Bindungen gesichert. Zugleich wird aber auch infolge des vorbeschriebenen Durchgriffs der unlösbar flächig aneinander befestigten Fügeflächen ein bleibender, hochzugfester Formschluß zwischen der Randeinfassung und dem unbearbeiteten Stanzrand der netzartigen Haltebahn erzielt. Dieser Formschluß gewährleistet insbesondere, daß jede von der Randeinfassung schlaufenartig eingebundene Haltestange die von ihr zu übertragenden Verankerungskräfte gleichmäßig und sicher auf der gesamten Länge des Netzrandes übertragen kann.

Eine besonders vorteilhafte erfindungsgemäße Ausgestaltung besteht darin, daß die Randeinfassung aus verschweißbarem thermoplastischem Kunststoff besteht, verschweißbaren thermoplastischen Kunststoff enthält oder mit verschweißbarem thermoplastischem Kunststoff beschichtet ist.

Insbesondere dann, wenn die Randeinfassung aus einer z.B. mit einer Verstärkungseinlage versehenen thermoplastischen Folie, wie z.B. aus PVC besteht, ergibt sich innerhalb der den netzseitigen Stanzrand aufnehmenden Fuge durch Druckanlage geeigneter Kontaktwärme-Werkzeuge eine werkstoffeinheitliche stoffschlüssige Schweißverbindung.

Auch durch geeignete Ausgestaltung der netzartigen Haltebahn läßt sich die Verbindung mit der Randeinfassung im Bereich der Stanzränder verbessern, beispielsweise dadurch, daß erfindungsgemäß die Haltebahn aus thermoplastischem Kunststoff, wie aus thermoplastischen Kunststoffasern, besteht, und daß die Maschenelemente an den von ihnen gebildeten Kreuzungspunkten, wie Knüpf- oder Einbindestellen, miteinander verschweißt sind.

Nach der ersten Variante einer erfindungsgemäßen Alternative besteht die Haltebahn aus thermoplastischem Kunststoff, welcher nicht mit dem thermoplastischen Kunststoff der Randeinfassung verschweißbar ist. Bei dieser erfindungsgemäßen Ausführungsform wird ein reiner Formschluß zwischen dem Rand der Haltebahn und der Randeinfassung hergestellt.

Die zweite Variante der erfindungsgemäßen Alternative sieht indessen vor, daß die Haltebahn aus thermoplastischem Kunststoff besteht, welcher mit dem thermoplastischen Kunststoff der Randeinfassung verschweißbar ist. Diese erfindungsgemäße Ausführungsform gestattet sowohl eine formschlüssige als auch eine stoffschlüssige Anbindung an die jeweilige Randeinfassung.

Welche thermoplastischen Kunststoffe einander ähnlich, d.h. miteinander verschweißbar, sind, ist dem Fachmann geläufig.

In weiterer zweckmäßiger Ausgestaltung der Erfindung sind die streifenförmigen Randeinfassungen vor ihrer Anbringung an den unbearbeiteten Stanzrändern der Haltebahn einstückig, insbesondere rahmenförmig, aneinander befestigt, insbesondere miteinander verschweißt.

Als besonders einfach und haltbar hat sich eine erfindungsgemäße Ausführungsform gezeigt, bei welcher jede Randeinfassung aus einem über den jeweiligen unbearbeiteten Stanzrand doppellagig umgeschlagenen, einstückig stoffschlüssig zusammenhängenden, Werkstoffstreifen besteht.

In den Zeichnungen ist die Erfindung anhand eines bevorzugten Ausführungsbeispiels näher dargestellt, es zeigt,
Fig. 1 eine mehr schematische Ansicht einer bahnförmigen Rückhaltevorrichtung im ausgebreiteten Betriebszustand (irgendwelche karosserieseitigen Befestigungsstellen sind nicht gezeigt) und
Fig. 2 und 3 Schnittdarstellungen entsprechend den Schnittlinien II-II und III-III in Fig. 1, jeweils in vergrößerter Darstellung.

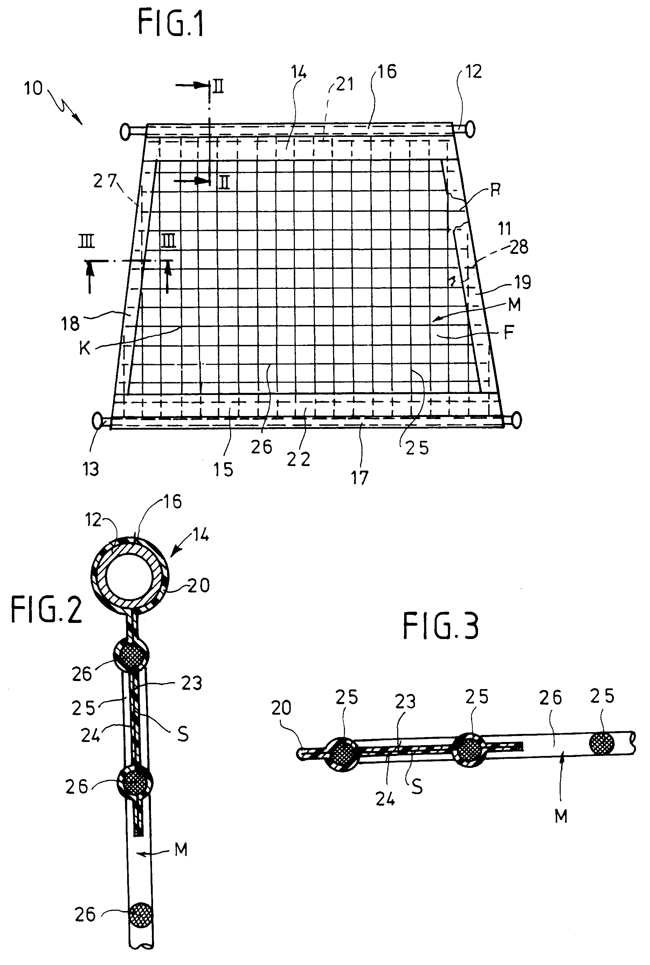

In Fig. 1 ist eine bahnförmige Rückhaltevorrichtung für den Innenraum von Kraftfahrzeugen insgesamt mit der Bezugsziffer 10 bezeichnet.

Die Rückhaltevorrichtung 10 dient der Unterteilung und Absicherung des Laderaums z.B. eines Kombinations-Kraftwagens.

Die Rückhaltevorrichtung 10 weist eine Haltebahn 11 auf, welche netzartige Maschen M besitzt, deren ringsum geschlossene Maschenfenster mit F bezeichnet sind.

Zu ihrer Befestigung weist die Rückhaltevorrichtung 10 eine obere Kaltestange 12 und eine untere Haltestange 13 auf. Zu deren Befestigung an der Haltebahn 11 sind oben an dieser eine Randeinfassung 14 und unten eine Randeinfassung 15 angebracht.

Die Randeinfassungen 14, 15 bestehen jeweils aus einer mit einer nicht gezeigten textilen Armierung versehenen Folie 20 aus PVC.

Die Randeinfassungen 14, 15 weisen eine streifenförmige Form auf und werden über die unregelmäßig und gewissermaßen "ausgefransten" unbearbeiteten Stanzränder der Haltebahn 11 doppellagig umgeschlagen.

Die streifenförmigen Randeinfassungen 14, 15 sind so breit, daß sie nach ihrer Anbringung an der Haltebahn 11 Aufnahmekanäle 16, 17 für die Haltestangen 12, 13 ermöglichen.

Nach dem doppellagigen Umschlagen der streifenförmigen Randeinfassungen 14, 15 über die unbearbeiteten Netzränder 21, 22 hinweg werden die gegeneinander weisenden Fügeflächen 23, 24 der Randeinfassung 14, 15 durch Andrücken von Kontaktwärmeflächen aufweisenden Werkzeugen miteinander verschweißt, und zwar stoffschlüssig und flächig miteinander verbunden. Hierbei durchgreifen die Schweißflächen S die zwischen den Maschenelementen 25 (kettfadenartiges Maschenelement) und 26 (schußfadenartiges Maschenelement) gebildeten Freiräume. Diese Freiräume sind als Maschenfenster F geschlossen oder als nur zwei- oder dreiseitig von den Maschenelementen 25, 26 begrenzte Freiräume R offen.

Ein solcher Freiraum R ist rechts in Fig. 1 an einer Stelle gezeigt, an welcher einer der beiden seitlichen streifenförmigen Randeinfassungen 18, 19, und zwar die Randeinfassung 19, teilweise weggeschnitten dargestellt ist.

Die seitlichen streifenförmigen Randeinfassungen 18, 19 sind im wesentlichen identisch ausgestaltet wie die oberen und unteren Randeinfassungen 14 und 15, mit der Ausnahme, daß die seitlichen Randeinfassungen 18, 19 keine Aufnahmekanäle 16, 17 für irgendwelche Haltestangen aufweisen.

Die Haltebahn 11 stellt ein in ihrer Grundkontur trapezförmiges Stanzteil dar. Hierbei können die Maschen M an den Überkreuzungsstellen K (z.B. Knüpfstellen, Einbindungsstellen) der kettfadenartigen Maschenelemente 25 und der schußfadenartigen Maschenelemente 26, die aus thermoplastischen Fasern bestehen, miteinander verschweißt sein.

Zur Rationalisierung der Herstellung kann es zweckmäßig sein, daß die vier streifenartigen Randeinfassungen 14, 15 sowie 18, 19 vor ihrem doppellagigen Umlegen und vor ihrer Anbringung an der Haltebahn 11 vorläufig oder bleibend zu einem trapezförmigen rahmenartigen Gebilde miteinander verbunden (insbesondere miteinander verschweißt) sind.

Aus der vorstehenden Beschreibung wird deutlich, daß die Randeinfassungen 14, 15 sowie 18, 19, deren gegeneinander weisende Fügeflächen 23, 24 miteinander thermisch verschweißt sind, die Netzränder 21, 22 sowie 27, 28 sicher stabilisieren können. Zugleich ist eine derartig vorteilhafte Befestigung in Verbindung mit den Haltestangen 12, 13 auch in der Lage, übergroße Zugkräfte bei Belastung der Haltebahn 11, z.B. durch aufprallendes Ladegut, sicher aufzunehmen.

## Patentansprüche

1. Bahnförmige Rückhaltevorrichtung (10) für den Innenraum von Kraftfahrzeugen, mit einer netzartige Maschen (M) aufweisenden Haltebahn (11), deren Umfangskontur von flächigen streifenförmigen Randeinfassungen (14, 15; 18, 19) aus textilem oder folienartigem Werkstoff saumartig begrenzt ist, von denen mindestens eine Randeinfassung (14) mindestens eine Schlaufe (bei 16, 17) zur Aufnahme einer karosserieseitig zu befestigenden Haltestange (12, 13) bildet, dadurch gekennzeichnet, daß die Haltebahn (11) ein Stanzteil mit unbearbeiteten Stanzrändern (21, 22; 27, 28) ist, von denen jeder in der Fuge zwischen zwei gegeneinander weisenden Fügeflächen (23, 24) einer Randeinfassung (14, 15; 18, 19) aufgenommen ist, wobei die zwischen den Maschenelementen (25, 26) gebildeten und von der Randeinfassung (14, 15; 18, 19) überlappten Freiräume (F, R) unter Einbeziehung geschlossener Maschenfenster (F) von den unlösbar flächig aneinander befestigten Fügeflächen (23, 24) durchgriffen sind.

2. Bahnförmige Rückhaltevorrichtung nach Anspruch 1, dadurch gekennzeichnet, daß die Randeinfassung (14, 15; 18, 19) aus verschweißbarem thermoplastischem Kunststoff besteht, verschweißbaren thermoplastischen Kunststoff enthält oder mit verschweißbarem thermoplastischem Kunststoff beschichtet ist.

3. Bahnförmige Rückhaltevorrichtung nach Anspruch 1 oder nach Anspruch 2, dadurch gekennzeichnet, daß die Haltebahn (11) aus thermoplastischem Kunststoff, wie aus thermoplastischen Kunststoffasern besteht, und daß die Maschenelemente (25, 26) an den von ihnen gebildeten Kreuzungspunkten (K), wie Knüpf- oder Einbindestellen, miteinander verschweißt sind.

4. Bahnförmige Rückhaltevorrichtung nach Anspruch 2 oder nach Anspruch 3, dadurch gekennzeichnet, daß die Haltebahn (11) aus thermoplastischem Kunststoff besteht, welcher nicht mit dem thermoplastischen Kunststoff der Randeinfassung (14, 15; 18, 19) verschweißbar ist.

5. Bahnförmige Rückhaltevorrichtung nach Anspruch 2 oder nach Anspruch 3, dadurch gekennzeichnet, daß die Haltebahn (11) aus thermoplastischem Kunststoff besteht, welcher mit dem thermoplastischen Kunststoff der Randeinfassung (14, 15; 18, 19) verschweißbar ist.

6. Bahnförmige Rückhaltevorrichtung nach einem der Ansprüche 1 bis 5, dadurch gekennzeichnet, daß die streifenförmigen Randeinfassungen (14, 15; 18, 19) vor ihrer Anbringung an den unbearbeiteten Stanzrändern (21, 22; 27, 28) der Haltebahn (11) einstückig, insbesondere rahmenförmig, aneinander befestigt, insbesondere miteinander verschweißt, sind.

7. Bahnförmige Rückhaltevorrichtung nach einem der Ansprüche 1 bis 6, dadurch gekennzeichnet, daß jede Randeinfassung (14, 15; 18, 19) aus einem über den jeweiligen unbearbeiteten Stanzrand (21, 22; 27, 28) doppellagig umgeschlagenen, einstückig stoffschlüssig zusammenhängenden, Werkstoffstreifen besteht.

## Claims

1. Web-shaped hold-back device (10) for the interior of motor vehicles, with a holding web (11) which has meshes (M) and the peripheral outline of which is bounded, after the fashion of a hem, by laminar, strip-shaped border edgings (14, 15; 18, 19) which are made of textile or film-like material and of which at least one border edging (14) forms at least one loop (at 16, 17) for accommodating a holding bar (12, 13) which is to be fastened to the vehicle body, characterized in that the holding web (11) is a stamped part with unprocessed stamped borders (21, 22; 27, 28), each of which is accommodated in the joint between two joint faces (23, 24), which point in opposite directions to one another, of a border edging (14, 15; 18, 19), while the free spaces (F, R) formed between the mesh elements (25, 26) and overlapped by the border edging (14, 15; 18, 19) are penetrated, with the inclusion of closed mesh windows (F), by the joint faces (23, 24) which are fastened to one another in a non-detachably laminar manner.

2. Web-shaped hold-back device according to claim 1, characterized in that the border edging (14, 15; 18, 19) consists of heat-sealable thermoplastic plastics material, contains heat-sealable thermoplastic plastics material or is coated with heat-sealable thermoplastic plastics material.

3. Web-shaped hold-back device according to claim 1 or 2, characterized in that the holding web consists of thermoplastic plastics material, such as thermoplastic plastics fibres, and that the mesh elements (25, 26) are heat-sealed to one another at the crossing points (K), such as knotting or binding-in points, formed by the said mesh elements.

4. Web-shaped hold-back device according to claim 2 or 3, characterized in that the holding web (11) consists of thermoplastic plastics material that cannot be heat-sealed to the thermoplastic plastics material of the border edging (14, 15; 18, 19).

5. Web-shaped hold-back device according to claim 2 or 3, characterized in that the holding web (11) consists of thermoplastic plastics material that can be heat-sealed to the thermoplastic plastics material of the border edging (14, 15; 18, 19).

6. Web-shaped hold-back device according to one of claims 1 to 5, characterized in that the strip-shaped border edgings (14, 15; 18, 19) are fastened to one another, particularly heat-sealed to one another, in one piece, particularly in the form of a frame, before their attachment to the unprocessed stamped borders (21, 22; 27, 28) of the holding web (11).

7. Web-shaped hold-back device according to one of claims 1 to 6, characterized in that each border edging (14, 15; 18, 19) consists of a strip of material which is wrapped round in a double layer over the particular unprocessed stamped border (21, 22; 27, 28) and coheres in one piece in a material-locking manner.

## Revendications

1. Dispositif de retenue (10) en forme de nappe, pour l'habitacle de véhicules automobiles, avec une nappe de retenue (11) présentant des mailles (M) en filet, dont le contour périphérique est délimité à la façon d'un ourlet par des encadrements de bordure (14, 15; 18, 19) plats en forme de bandes, réalisées en un matériau textile ou du genre d'une feuille, dont au moins un encadrement de bordure (14) constitue au moins une boucle (en 16, 17) destinée à recevoir une barre de maintien (12, 13) à fixer côté carrosserie, caractérisé en ce que la nappe de retenue (11) est une pièce estampée ayant des bords d'estampage (21, 22; 27, 28) non travaillés, dont chacun est logé dans le joint existant entre deux faces de joint (23, 24), tournées l'une vers l'autre, d'un encadrement de bordure (14, 15; 18, 19), les espaces libres (F, R), constitués entre les éléments de mailles (25, 26) et chevauchés par l'encadrement de bordure (14, 15; 18, 19) étant pénétrés, avec intégration de fenêtres de mailles (F) fermées, par les faces de joint (23, 24) fixées l'une sur l'autre à plat, de façon indésolidarisable.

2. Dispositif de retenue sous forme de nappe selon la revendication 1, caractérisé en ce que l'encadrement de bordure (14, 15; 18, 19) est constitué d'une matière synthétique thermoplastique soudable, contient une matière synthétique thermoplastique soudable ou est revêtu d'une matière synthétique thermoplastique soudable.

3. Dispositif de retenue sous forme de nappe selon la revendication 1 ou la revendication 2, caractérisé en ce que la nappe de retenue (11) est constituée d'une matière synthétique thermoplastique telle que des fibres synthétiques thermoplastiques et en ce que les éléments de mailles (25, 26) sont soudés aux points de croisement (K) qu'ils constituent, tels que des points de nouage ou de liage.

4. Dispositif de retenue sous forme de nappe selon la revendication 2 ou 3, caractérisé en ce que la bande de retenue (11) est constituée d'une matière synthétique thermoplastique qui n'est pas soudable à la matière synthétique thermoplastique de l'encadrement de bordure (14, 15; 18, 19)

5. Dispositif de retenue sous forme de nappe selon la revendication 2 ou la revendication 3, caractérisé en ce que la nappe de retenue (11) est constituée d'une matière synthétique thermoplastique qui est soudable à la matière synthétique thermoplastique de l'encadrement de bordure (14, 15; 18, 19).

6. Dispositif de retenue sous forme de nappe selon l'une des revendications 1 à 5, caractérisé en ce que les encadrements de bordure (14, 15; 18, 19) réalisés sous forme de bandes sont fixés les unes aux autres, d'un seul tenant, avant leur montage sur les bords d'estampage (21, 22; 27, 28) non travaillés de la nappe de retenue (11), en particulier fixés sous forme de cadre, la fixation se faisant en particulier par soudage les uns aux autres.

7. Dispositif de retenue sous forme de nappe selon l'une des revendications 1 à 6, caractérisé en ce que chaque encadrement de bordure (14, 15; 18, 19) est constitué d'une bande de matériau, rabattue en double couche sur le bord d'estampage (21, 22; 27, 28) non travaillé respectif et mise en cohésion par la matière pour former une seule pièce.
